# EUROPÄISCHE PATENTSCHRIFT

(11) **EP 0 919 036 B1**
(45) Veröffentlichungstag und Bekanntmachung des Hinweises auf die Patenterteilung: **01.03.2000**
(21) Anmeldenummer: 97940082.7
(22) Anmeldetag: 14.08.1997
(51) Int. Cl.: G06F 17/60, G06F 17/30

(54) **VERFAHREN ZUR AUTOMATISCHEN MASCHINELLEN ERZEUGUNG VON FERTIGUNGSUNTERLAGEN**
PROCESS FOR THE AUTOMATIC MACHINE PRODUCTION OF ENGINEERING DATA
PROCEDE POUR LA PRODUCTION MECANISEE AUTOMATIQUE DE DOCUMENTS DE FABRICATION

(30) Priorität: 16.08.1996 DE 19633870
(43) Veröffentlichungstag der Anmeldung: 02.06.1999
(73) Patentinhaber: DaimlerChrysler AG, 70567 Stuttgart (DE)
(72) Erfinder: JÜNGST, Ernst-Werner, D-13349 Berlin (DE)
(74) Vertreter: Lindner-Vogt, Karin, Dipl.-Phys.
(86) Internationale Anmeldenummer: EP9704441
(87) Internationale Veröffentlichungsnummer: WO9808173

(56) Entgegenhaltungen:
- EP-A- 0 459 626
- DE-A- 3 911 465
- US-A- 5 295 067

## Beschreibung

Bei der industriellen Fertigung von Produkten, die aus Komponenten gemäß individuellen Spezifikationen zusammengefügt werden, besteht ein wesentlicher Arbeitsschritt in der Erzeugung der spezifischen Fertigungsunterlagen für jedes der individuell spezifizierten Produkte. Die Informations- verarbeitungsleistung dieses Arbeitsschritts wird bisher fast ausschließlich durch Menschen erbracht, wodurch dieser Arbeitsschritt sich als zeitaufwendig, kostenintensiv und fehlerträchtig erweist.

Aus der Literatur ( z.B. Ehrig et al.: *Graph Grammars and their Application to Computer Science,* Springer Lecture Notes CS 291, 1986 ) ist eine prinzipielle Möglichkeit zur Umformung von Graphen (Graph-Grammatiken) bekannt, bei der ein vorbestimmter Satz von Transformationsregeln einmalig oder wiederholt auf einen Wurzelknoten des Graphen angewendet und daraus ein komplexer Graph erzeugt wird. Bei einer analogen Übertragung dieser Verfahren in den Bereich der Schemazeichnungen würde die Ur-Schemazeichnung in eine Ziel-Schemazeichnung durch Anwendung eines Satzes von Regeln umgeformt werden, die für alle gleichartigen Symbole bzw. gleichen Symbolkonstellationen gleich wirken. Eine Umformung, bei der zwei gleiche Symbole oder Symbolkonstellationen in Abhängigkeit von externen Daten bei der Übertragung in die Ziel-Schemazeichnung individuell unterschiedlich behandelt werden, ist damit nicht moeglich.

Aus der Literatur ( z.B. M. Heinrich: Expertensystem zur Schaltplanerstellung. *Automatisierungs- technische Praxis* atp 31(1989)4, 190-195 ) sind ferner Programme und Verfahren bekannt, wie mittels Regeln anhand von Spezifikationsdaten Macrosymbole zu Schemazeichnungen zusammengefügt werden können. Die Verfahren haben jedoch den gravierenden Nachteil, daß die Macrosymbole vorab entworfen werden müssen und die formale und sachliche Korrektheit der beim Zusammenfügen der Macrosymbole möglicherweise entstehenden Schemazeichnungen vorab sichergestellt werden muß.

Aus der Literatur ( z.B. C.L. Forgy: Rete: A fast algorithm for the many pattern/many object pattern match problem. *Artificial Intelligence,* 19(1982)1, 17-37) und aus Patenten ( z.B. DE P 30 43 563.3 - 53) sind ferner verschiedene Verfahren bekannt, wie mittels Regeln anhand von Daten Werte für Variable bestimmt werden. Ein prinzipiell mögliches Verfahren zur Erzeugung von Fertigungsunterlagen besteht dann darin, die Bestandteile des Produkts anhand der Spezifikation durch Auswertung eines Satzes von Regeln zu ermitteln und dann aus dieser Stückliste die Symbole der Komponenten und/oder ihrer Betriebsmitteln zu bestimmen und durch aus der Literatur bekannte Verfahren der räumlichen Aordnung (z.B. M. May: *Über das Layout netzartiger Systeme,* Habilitationsschrift, Akad. d. Wiss. der DDR, Berlin, 1990) die Fertigungsunterlage zu erzeugen. Das Verfahren erfordert die Aufstellung von allgemeinen Regeln zur Gestaltung von Grafiken anhand der Bestandteile. Solche Verfahren erreichen selten ein attraktives Aussehen, weil die Auswirkung der Plazierungsregeln nur schwer vorhersehbar sind und der das Basiswissen festlegende Fachmann keine Möglichkeit erhält, seine grafischen Gestaltungswünsche auszudrücken.

DE 39 11 465 A zeigt entsprechend den Präanbel von Anspruch 1, wie ein System aus modularen komponenten konjiguiert und Schließlich auch visualisiert werden kann.

Erfinderisches Ziel war es, mit einem maschinell durchführbaren Verfahren die Aufgabe zu lösen, eine solche den Fertigungsprozess des individualisierten Produkts steuernde Fertigungsunterlage anhand der Daten der Spezifikation und anhand von Daten des Basiswissens über die im Rahmen einer Produktfamilie grundsätzlich fertigbaren individuellen Produkte automatisch maschinell zu erzeugen und anzugeben, wie das Basiswissen zweckmässig im Speicher der das Verfahren durchführenden Informationsverarbeitungsanlage repräsentiert wird. Dabei soll der das Basiswissen formulierende Fachmann Einfluß auf die graphische Gestaltung der Fertigungsunterlage nehmen können und die bei den bekannten Verfahren auftretenden Probleme der Wissensrepräsentation und Wissenspflege vermieden werden.

Diese Aufgabe wird erfindungsgemäss dadurch gelöst, dass
- in einem Speicher der Informationsverarbeitungsanlage eine Ur-Schemazeichnung codiert abgelegt ist,
   die als generische Repräsentation des Produkt-Variationsspektrums dient, wobei jeder möglichen Komponente Kᵢ wenigstens ein Symbol Sᵢ in der Ur-Schemazeichnung entspricht,
- in einem Speicher der Informationsverarbeitungsanlage für jedes Symbol Sᵢ, das der Komponente oder dem Betriebsmittel der Komponente Kᵢ entspricht, eine Codierung der Bedingung Bᵢ abgelegt ist, die das Vorhandensein der Komponente oder des Betriebsmittels der Komponente Kᵢ in einer die Spezifikation erfüllenden Ausprägung des Produkts festlegt,
- aus der Codierung einer Bedingung Bᵢ die Speicher direkt oder indirekt ermittelt werden können, in denen die in die Bedingung eingehenden Attribute der Spezifikation des Produkts abgelegt sind, und
- als spezifische Fertigungsunterlage für das nach der Spezifikation zu fertigende Produkt Pₓ eine Ziel-Schemazeichnung Zₓ aus der Ur-Schemazeichnung erzeugt wird, indem für alle Symbole Sⱼ der Ur-Schemazeichnung, für die eine Bedingung im Speicher enthalten ist, durch maschinelle Auswertung der zugeordneten Bedingung Bⱼ unter Verwendung der Werte der Attribute der Spezifikation geprüft wird, ob die Bedingung Bⱼ erfüllt ist, und das Symbol Sⱼ nur bei Erfülltsein der Bedingung Bⱼ in die Ziel-Schemazeichnung Zₓ aufgenommen wird.

Durch die Verwendung der Schemazeichnungen und die in diesen bereits grafisch repräsentierten Verbindungen zwischen Komponenten ist es nicht nötig, daß beim Wissenserwerb die je nach Spezifikation erforderlichen Verbindungen zwischen Komponenten durch Regeln explizit beschrieben werden müssen, was beim früheren Stand der Technik erforderlich war und erheblichen konzeptionellen und manuellen Aufwand machte, bei dem erfindungsgemäßen Verfahren dagegen sich bei der maschinellen Auswertung entsprechend den in Unteransprüchen beschriebenen Ausgestaltungen der Erfindung aus der Verbindungsstruktur der Symbole in der generischen Schemazeichnung automatisch ergibt.

## Patentansprüche

1. Verfahren zur automatischen maschinellen Erzeugung von spezifischen Fertigungsunterlagen für ein aus Komponenten aufzubauendes Produkt anhand von im Speicher der Informationsverarbeitungsanlage abgelegten Attributen der Spezifikation des Produkts und einer im Speicher der Informationsverarbeitungsanlage abgelegten generischen Repräsentation des Produkt-Variationsspektrums,
dadurch gekennzeichnet, daß
- in einem Speicher der Informationsverarbeitungsanlage eine Ur-Schemazeichnung, die als generische Repräsentation des Produkt-Variationsspektrums dient, wobei jeder möglichen Komponente Kᵢ wenigstens ein Symbol Sᵢ in der Ur-Schemazeichnung entspricht, codiert abgelegt ist,
- in einem Speicher der Informationsverarbeitungsanlage für jedes Symbol Sᵢ, das der Komponente oder dem Betriebsmittel der Komponente Kᵢ entspricht, eine Codierung der Bedingung Bᵢ abgelegt ist, die das Vorhandensein der Komponente oder des Betriebsmittels der Komponente Kᵢ in einer die Spezifikation erfüllenden Ausprägung des Produkts festlegt,
- aus der Codierung jeder Bedingung Bᵢ die Speicher direkt oder indirekt ermittelt werden können, in denen die in die Bedingung eingehenden Werte der Attribute der Spezifikation des Produkts abgelegt sind, und
- als spezifische Fertigungsunterlage für das nach der Spezifikation zu fertigende Produkt Pₓ eine Ziel-Schemazeichnung Zₓ aus der Ur-Schemazeichnung erzeugt wird, indem für alle Symbole Sⱼ der Ur-Schemazeichnung, für die eine Bedingung im Speicher enthalten ist, durch maschinelle Auswertung der zugeordneten Bedingung Bⱼ unter Verwendung der Werte der Attribute der Spezifikation geprüft wird, ob die Bedingung Bⱼ erfüllt ist, und das Symbol Sⱼ nur bei Erfülltsein der Bedingung Bⱼ in die Ziel-Schemazeichnung Zₓ aufgenommen wird.

2. Verfahren nach Anspruch 1, dadurch gekennzeichnet, daß
- als Ur-Schemazeichnung eine als Flußplan interpretierbare Grafik, z.B. ein Stromlaufplan, Signalflußplan oder Prozessfließbild, verwendet wird,
- im Speicher der Informationsverarbeitungsanlage für jedes Symbol individuell oder im Typ des Symbols abgelegt ist, welche Verbindungsstellen das Symbol hat,
- in der im Speicher enthaltenen Codierung der Ur-Schemazeichnung die Information abgelegt ist, ob das Symbol mit anderen Symbolen verbunden ist, und
- vor Übernahme eines Symbols Sⱼ in die Ziel-Schemazeichnung maschinell geprüft wird, ob durch die Nichtübernahme von einem oder mehreren anderen, in der Ur-Schemazeichnung mit dem Symbol Sⱼ direkt oder indirekt verbundenen Symbole eine Ziel-Schemazeichnung entstehen würde, bei der das Symbol Sⱼ an zumindest einer Verbindungsstelle unverbunden wäre, und in diesem Falle das Symbol Sⱼ nicht in die Ziel-Schemazeichnung übernommen wird.

3. Verfahren nach Anspruch 1 oder 2, dadurch
gekennzeichnet, daß
die einem Symbol Sᵢ in der Ur-Schemazeichnung zugeordnete Bedingung Bᵢ bei der Auswertung anhand der Daten der Spezifikation darüber entscheidet, ob das Symbol Sᵢ in die Ziel-Schemazeichnung übernommen wird oder in der Ziel-Schemazeichnung, abhängig von der Art des Symbols Sᵢ, entfällt oder durch ein anderes Symbol, z.B. ein neutrales Verbindungssymbol, ersetzt wird.

4. Verfahren nach Anspruch 3,
dadurch gekennzeichnet, daß
Symbole in der Ur-Schemazeichnung, für die die maschinelle Auswertung der Bedingungen dieser und/oder anderer Symbole in der Ur-Schemazeichnung ergibt, daß sie in der Ziel-Schemazeichnung einzeln oder als seriell verbundene Gruppe parallel verbunden wären mit einem einzelnen neutralen Verbindungssymbol oder einer seriell verbundenen Gruppe neutraler Verbindungssymbole, nicht in die Ziel-Schemazeichnung übernommen werden.

5. Verfahren nach einem der Ansprüche 1-4,
dadurch gekennzeichnet, daß
Symbole in der Ur-Schemazeichnung, für die die maschinelle Auswertung der Bedingungen dieser und/oder anderer Symbole in der Ur-Schemazeichnung ergibt, daß sie in der Ziel-Schemazeichnung durch neutrale Verbindungssymbole ersetzt und eine seriell verbundene Gruppe bilden würden, durch ein einzelnes neutralen Verbindungssymbol ersetzt werden.

6. Verfahren nach einem der Ansprüche 1-5,
dadurch gekennzeichnet, daß
die Erzeugung der Ziel-Schemazeichnung maschinelle Arbeitsschritte umfaßt, durch die
- die Ur-Schemazeichnung einmalig oder im Bedarfsfall in eine maschinenlesbare Form umgewandelt wird, bei der jede durch Verbindungen zusammenhängende Gruppe von Symbolen in ein System Boolescher Ausdrücke übersetzt wird, wobei die Terme der Booleschen Ausdrücke die den Symbolen zugeordneten Bedingungen enthalten und seriell verbundene Symbole oder Symbolgruppen durch UND-Verknüpfung der zugehörenden Terme, parallelverbundene Symbole oder Symbolgruppen durch ODER-Verknüpfung der zugehörenden Terme übersetzt werden,
- diese Booleschen Ausdrücke im Bedfarfsfall maschinell durch Einsetzen der Werte für die Variablen in den Bedingungen und systematische Vereinfachung der Booleschen Ausdrücke partiell ausgewertet werden und
- die verbleibenden nichttrivialen Booleschen Ausdrücke in eine entsprechende Ziel-Schemazeichnung rückübersetzt werden.

7. Verfahren nach einem der Ansprüche 1-6,
dadurch gekennzeichnet, daß
die Erzeugung der Ziel-Schemazeichnung maschinelle Arbeitsschritte umfasst, durch die
- die Ur-Schemazeichnung einmalig oder im Bedarfsfall maschinell in einen Graphen übersetzt wird, dessen Links je einem Symbol entsprechen,
- im Bedarfsfall gemäß den Daten der Spezifikation und der dem Symbol jedes Links zugeordneten Bedingung wiederholt maschinell ermittelt wird, ob ein Link entfällt oder nicht bzw. die beiden durch das Link verbundenen Knoten miteinander identifiziert werden oder nicht bzw. Knoten mit genau je einem zuführenden und einem wegführenden Link entfallen und dabei jeweils die beiden Links zu einem einzigen Link zusammengefaßt werden, und
- die verbleibenden nichttrivialen Teil-Graphen in entsprechende Symbolanordnungen für die Ziel-Schemazeichnung zurückübersetzt werden.

## Claims

1. Method of automated machine generation of specific production data for a product, which is to be assembled from components, on the basis of attributes, which are filed in the store of the data processing installation, of the specification of the product and a generic representation, which is filed in the store of the data processing installation, of the product variation spectrum, characterised in that
- an original schematic drawing, which serves as a generic representation of the product variation spectrum, is filed in coded form in a store of the data processing installation, wherein at least one symbol Sᵢ in the original schematic drawing corresponds to each possible component Kᵢ,
- a coding of the condition Bᵢ, which establishes the presence of the components or the operating means of the components Kᵢ in a specific design of the product fulfilling the specification, is filed in a store of the data processing installation for each symbol Sᵢ which corresponds with the components or the operating means of the components Kᵢ,
- from the coding of each condition Bᵢ there can be directly or indirectly ascertained the store in which the values, which occur in the conditions, of the attributes of the specification of the product are filed, and
- a target schematic drawing Zₓ is generated from the original schematic drawing as specific production data for the product Pₓ to be produced in accordance with the specification, in that for all symbols Sⱼ of the original schematic drawing for which a condition is contained in the store it is checked by machine evaluation of the associated condition Bⱼ with use of the values of the attributes of the specification whether the condition Bⱼ is fulfilled and the symbol Sⱼ is admitted into the target schematic drawing Zₓ only in the case of fulfilment of the condition Bⱼ.

2. Method according to claim 1, characterised in that
- a graphic, for example a current course chart, signal flow chart or process flow chart, able to be interpreted as flow chart is used as original schematic drawing,
- in the store of the data processing installation there is filed for each symbol individually or in type of symbol which connecting points the symbol has,
- data is filed in the coding, which is contained in the store, of the original schematic drawing whether the symbol is connected with other symbols, and
- before acceptance of a symbol Sⱼ into the target schematic drawing it is checked by machine whether, through not taking over one or more other symbols directly or indirectly connected in the original schematic drawing with the symbol Sⱼ, a target schematic drawing would arise in which the symbol Sⱼ is unconnected at at least one connecting point and in this case the symbol Sⱼ is not accepted into the target schematic drawing.

3. Method according to claim 1 or 2, characterised in that the condition Bᵢ, which is associated with a symbol Sᵢ in the original schematic drawing, decides in the evaluation based on the data of the specification whether the symbol Sᵢ is accepted into the target schematic drawing or, depending on the type of the symbol Sᵢ, omitted from the target schematic drawing or replaced therein by another symbol, for example a neutral connecting symbol.

4. Method according to claim 2, characterised in that symbols in the original schematic drawing, for which the machine evaluation of the conditions of these and/or other symbols in the original schematic drawing gives the result that they would be connected in the target schematic drawing individually or in a parallel as serially connected groups with an individual neutral connecting symbol or a serially connected group of neutral connecting symbols, are not accepted into the target schematic drawing.

5. Method according to one of claims 1 to 4, characterised in that symbols in the original schematic drawing, for which the machine evaluation of the conditions of these and/or other symbols in the original schematic drawing gives the result that they would be replaced in the target schematic drawing by neutral connecting symbols and form a serially connected group, are replaced by an individual neutral connecting symbol.

6. Method according to one of claims 1 to 5, characterised in that the generation of target schematic drawing comprises machine working steps by which
- the original schematic drawing is converted first of all or as needed into a machine-readable form in which each group, which is cohesive through connections, of symbols is translated into a symbol of Boolesch expressions, wherein the terms of the Boolesch expressions contain the conditions associated with the symbols and serially-connected symbols or symbol groups are translated by AND linking of the associated terms and parallelly-connected symbols or symbol groups by OR linking of the associated terms,
- these Boolesch expressions in case of need are partially evaluated by insertion of the values for the variables in the conditions and systematic simplification of the Boolesch expressions, and
- the remaining, non-trivial Boolesch expressions are translated back into a corresponding target schematic drawing.

7. Method according to one of claims 1 to 6, characterised in that the generation of the target schematic drawing comprises machine working steps by which
- the original schematic drawing is translated first of all or in case of need into a graph, of which the links each correspond to a respective symbol,
- in the case of need it is repeatedly ascertained by machine according to the data of the specification and the condition associated with the symbol of each link whether a link is omitted or not or the two nodes connected by the link are identified with one another or not or nodes with exactly one respective link leading to and leading away are omitted and in that case each time the two links are combined into a single link, and
- the remaining non-trivial partial graphs are translated back into corresponding symbol arrangements for the target schematic drawing.

## Revendications

1. Procédé de production mécanique automatique de documents spécifiques de fabrication pour un produit devant être formé de composants, sur la base d'attributs, mémorisés dans la mémoire de l'installation de traitement d'informations, de la spécification du produit et sur la base d'une représentation générique, mémorisée dans la mémoire de l'installation de traitement d'informations, du spectre de variation du produit, caractérisé en ce que
- dans une mémoire de l'installation de traitement d'informations est mémorisé d'une manière codée un dessin schématique d'origine, qui sert de représentation générique du spectre de variation du produit, au moins un symbole Sᵢ dans le dessin schématique d'origine correspondant à chaque composant possible Kᵢ,
- dans une mémoire de l'installation de traitement d'informations pour chaque symbole Sᵢ, qui correspond au composant ou au moyen de fonctionnement du composant Kᵢ, est mémorisé un codage de la condition Bᵢ, qui fixe la présence du composant ou du moyen de fonctionnement du composant Kᵢ dans une empreinte du produit, qui satisfait à la spécification,
- à partir du codage de chaque condition Bᵢ peuvent être déterminées, directement ou indirectement, les mémoires, dans lesquelles sont mémorisées les valeurs, qui interviennent dans la condition, des attributs de la spécification du produit, et
- un dessin schématique cible Zₓ est produit, en tant que document de fabrication spécifique pour le produit P_{X} devant être fabriqué selon la spécification, à partir du dessin schématique d'origine par le fait que pour tous les symboles Sⱼ du dessin schématique d'origine, pour lesquels une condition est contenue dans la mémoire, un contrôle est effectué, par exploitation mécanique de la condition associée Bⱼ moyennant l'utilisation des valeurs des attributs de la spécification, pour déterminer si la condition Bⱼ est satisfaite, et le symbole Sⱼ est enregistré uniquement lorsque la condition Bⱼ dans le dessin schématique cible Z_{X} est satisfaite.

2. Procédé selon la revendication 1, caractérisé en ce que
- comme dessin schématique d'origine on utilise un graphique pouvant être interprété en tant qu'organigramme, par exemple un schéma électrique, un organigramme de transmission de signaux ou un organigramme de déroulement de processus,
- les points de liaison que le symbole possède, sont mémorisés dans la mémoire d'installation de traitement d'informations pour chaque symbole individuellement ou dans le type du symbole,
- dans le code, contenu dans la mémoire, du dessin schématique d'origine est mémorisée l'information indiquant si le symbole est relié à d'autres symboles, et
- avant le transfert d'un symbole Sⱼ sur le dessin schématique cible, un contrôle mécanique est exécuté pour déterminer si sous l'effet du non-transfert d'un ou de plusieurs autres symboles reliés directement ou indirectement au symbole Sⱼ dans le dessin schématique d'origine, on obtiendrait un dessin schématique cible, dans lequel le symbole Sⱼ ne serait pas lié à au moins un emplacement de liaison, et dans ce cas le symbole Sⱼ n'est pas transféré dans le dessin schématique cible.

3. Procédé selon la revendication 1 ou 2, caractérisé en ce que la condition Bᵢ associée à un symbole Si dans le dessin schématique d'origine détermine lors de l'exploitation, en fonction des données de la spécification, si le symbole Sᵢ est transféré dans le dessin schématique cible ou bien est absent dans le dessin schématique cible, en fonction du type du symbole Sᵢ, ou est remplacé par un autre symbole, par exemple un symbole de liaison neutre.

4. Procédé selon la revendication 3, caractérisé en ce que
- des symboles contenus dans le dessin schématique d'origine, pour lesquels l'exploitation mécanique des conditions de ces symboles et/ou d'autres symboles dans le dessin schématique d'origine montre que dans le dessin schématique cible, ils seraient reliés individuellement ou sous la forme d'un groupe relié en série, en parallèle avec un symbole de liaison neutre individuel ou un groupe relié en série de symboles de liaison neutres, ne sont pas transférés dans le dessin schématique cible.

5. Procédé selon l'une des revendications 1-4, caractérisé en ce que
- des symboles dans le dessin schématique d'origine, pour lesquels l'exploitation mécanique des conditions de ces symboles et/ou d'autres symboles dans le dessin schématique d'origine montre qu'ils seraient remplacés dans le dessin schématique cible par des symboles de liaison neutres et formeraient un groupe relié en série, sont remplacés par un symbole de liaison neutre individuel.

6. Procédé selon l'une des revendications 1-5, caractérisé en ce que
- la production du dessin schématique cible comprend des étapes opératoires mécaniques, à l'aide desquelles le dessin schématique d'origine est converti, une fois ou en cas de besoin sous une forme lisible par machine, pour laquelle chaque groupe de symboles, qui est réuni par des liaisons, est converti en un système d'expressions booléennes, les termes des expressions booléennes contenant les conditions associées aux symboles, et des symboles ou des groupes de symboles, reliés en série, sont transformés par combinaison ET des termes associés, et des symboles ou des groupes de symboles reliés en parallèle sont convertis par une combinaison OU des termes associés,
- ces expressions booléennes sont exploitées partiellement, le cas échéant, mécaniquement, par insertion des valeurs pour les variables dans les conditions et simplification systématique des expressions booléennes, et
- les expressions booléennes subsistantes non triviales sont ramenées par conversion inverse dans un dessin schématique cible correspondant.

7. Procédé selon l'une des revendications 1-6, caractérisé en ce que
la production du dessin schématique cible comprend des étapes opératoires mécaniques, à l'aide desquelles :
- le dessin schématique d'origine est transformé, une fois ou en cas de besoin mécaniquement en un graphique, dont les liaisons correspondent à des symboles respectifs,
- le cas échéant, une détermination mécanique est effectuée de nouveau, conformément aux données de la spécification et à la condition associée aux symboles de chaque liaison, pour déterminer si une liaison est absente ou non et si les deux noeuds reliés entre eux par la liaison sont identifiés ou non ou si des noeuds avec une liaison d'arrivée précise et une liaison de départ précise sont absents et si les deux liaisons sont réunies pour former une telle liaison, et
- les graphes partiels subsistants, non triviaux, sont ramenés par conversion dans des dispositions de symboles correspondants pour le dessin schématique cible.
